(19) **Europäisches Patentamt**

**European Patent Office**

**Office européen des brevets**

(11) **EP 1 526 652 A1**

(12) **EUROPEAN PATENT APPLICATION**

(43) Date of publication:
**27.04.2005 Bulletin 2005/17**

(51) Int Cl.⁷: **H04B 7/005**, H04Q 7/38

(21) Application number: **03292674.3**

(22) Date of filing: **24.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Evolium S.A.S.**<br>**75008 Paris (FR)** | (72) Inventor: **Agin, Pascal**<br>**94370 Sucy en Brie (FR)**<br><br>(74) Representative: **El Manouni, Josiane**<br>**COMPAGNIE FINANCIERE ALCATEL**<br>**Départememt Propriété Industrielle**<br>**54, rue La Boétie**<br>**75008 Paris (FR)** |

(54) **A method for setting a power offset for power control of a downlink shared channel in a mobile radiocommunication system**

(57) An object of the invention is a method for setting a power offset for power control of a downlink shared channel in a mobile radiocommunication system, a method wherein said power offset is dynamically adapted, as a function of radio environment conditions, in a way as to minimise the transmit power of said downlink shared channel, while still achieving the quality of service.

# FIG_1

**Description**

The present invention is generally concerned with mobile radiocommunication systems.

The present invention is in particular applicable to third generation mobile radiocommunication systems, such as in particular UMTS (Universal Mobile Telecommunication System).

In a general way, mobile communication systems are subject to standardisation; therefore, for more information on such systems, it is possible to refer to the corresponding standards, published by the corresponding standardisation bodies, such as 3GPP (« 3rd generation Partnership Project »).

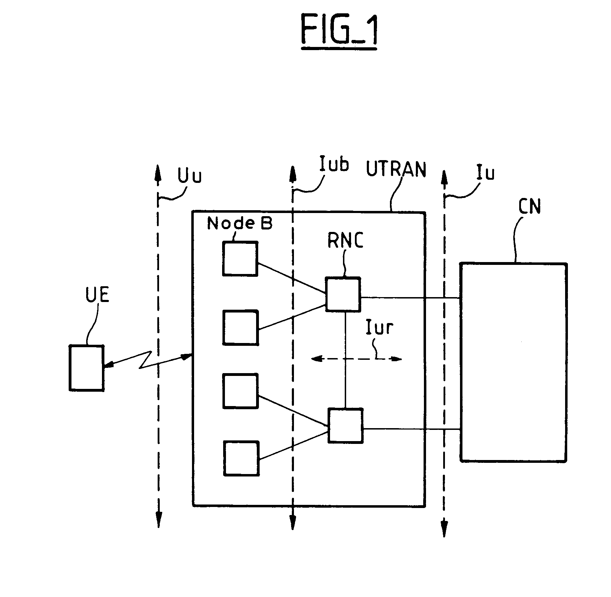

The general architecture of a mobile radiocommunication system such as in particular a system of UMTS type is recalled in figure 1. The system comprises a mobile radiocomunication network communicating wih mobile terminals or UE (« User Equipement ») and with external networks (not specifically illustrated).

The mobile radiocommunication network comprises:

- a Radio Access Network, or UTRAN (« UMTS Terrestrial Radio Access Network »),
- a Core Network, or CN.

Third generation systems, in particular of UMTS type, use a radio access technology of W-CDMA type (where W-CDMA stands for « Wideband - Code Division Multiple Access »).

The UTRAN comprises base stations called « Node B », and base station controllers called RNC (« Radio Network Controller »). The UTRAN is in relation, on the one hand with mobile terminals UE, via an interface called « Uu interface » (or radio interface), and on the other hand with the CN via an interface called « lu interface ». Within the UTRAN, the Nodes B communicate with the RNCs via an interface called « lub interface » and an interface called « lur interface » may also be provided between RNCs.

Power control techniques are generally used in such systems to improve performances (in terms of quality of service, of capacity,...etc.) and generally include power control algorithms such as open-loop and closed loop algorithms, the closed-loop algorithms in turn including inner-loop and outer-loop algorithms.

Besides, systems such as in particular UMTS use the technique of « soft handover », according to which a UE can be connected simultaneously to different Node B, i.e. a UE can be served simultaneously by different serving cells (the set of serving cells, or active cells, being called Active Set). Soft handover is beneficial, in particular in that it provides a macro-diversity gain, due to the different radio links which can be used to improve reception quality. The term « soft handover » will in the following be used in a broad sense, also covering softer handover (where a UE can be connected simultaneously to different sectors of a Node B) as well as soft-softer handover.

For a given Node B, the RNC which controls this Node B is called CRNC (Controlling Radio Network Controller). The CRNC has a role of load control and of control and allocation of radio resource for the Node B which it controls.

For a given communication relating to a given UE, there is a RNC called SRNC (Serving Radio Network Controller) having a role of control of the communication, including functions of control of establishment and release of radio links, of control of parameters that are likely to change during the communication, such as : bit-rate, power, spreading factor, ...etc. The different Node B to which a UE is connected may or not be controlled by a same RNC. If they are controlled by different RNC, one of these RNC has a role of SRNC, and a Node B connected to the UE and not controlled by the SRNC communicates with the SRNC via the RNC which controls it, also called DRNC (Drift Radio Network Controller), via the lur interface.

In a general way, different types of data can be transmitted in these systems : data corresponding to user data or traffic, and data corresponding to control or signalling data, necessary for system operation. Different protocols have been defined for the transfer of different types of data between different elements of such systems, in particular :

- RANAP (« Radio Access Network Application Part») protocol, as defined in 3GPP TS (Technical Specification) 25.413, for the transfer of signalling data on the « lu » interface,
- RNSAP (« Radio Network Subsystem Application Part ») protocol, as defined in 3GPP TS 25.423, for the transfer of signalling data on the « lur » interface,
- NBAP (« Node B Application Part ») protocol, as defined in 3GPP TS 25.433, for the transfer of signalling data on the « lub » interface,
- RRC (« Radio Resource Control ») protocol, as definded in 3GPP TS 25.331, for the transfer of signalling data on the Uu interface,
- Frame Protocols, for the transfer of user data on different interfaces of UTRAN, as defined for example in 3GPP TS 25.425 (Frame Protocol for common channels on the lur interface), TS 25.427 (Frame Protocol for dedicated channels on the lub and lur interface), TS 25.435 (Frame Protocol for common channels on the lub interface).

In a general way, different types of channels have been defined for the transfer of data between UE and UTRAN, corresponding to different levels or layers of the communication protocol between UE and UTRAN, that is, from the highest to the lowest level : logical channels, transport channels, and physical channels. Further, for each of these channel types, there is generally made a distinction between common channels (that are common to several users) and dedicated channels (that are dedicated to different users).

There is one dedicated transport channel, called DCH (Dedicated CHannel). In the physical layer the DCH is mapped onto two dedicated physical channels : DPDCH (Dedicated Physical Data CHannel) carrying user data, and DPCCH (Dedicated Physical Control CHannel) carrying physical layer control information.

In a general way, there is also made a distinction between different types of user data or traffic. A particular type of traffic is packet traffic, which is such that during a packet call (or packet session) a bursty sequence of packets is transmitted.

In general, different types of channels can be used to carry packet traffic, each having its advantages and drawbacks. Dedicated channels generally have the advantage that they can use power control and soft handover, but they generally have the drawback of a long setup time. On the contrary, common channels generally have the advantage of a low setup time but they generally have the drawback that they cannot use power control and soft handover.

The downlink shared channel (DSCH) is a downlink transport common channel used to transmit sporadic data, such as data generated by packet services. This transport channel is carried on the air interface by the physical downlink shared channel (PDSCH).

The PDSCH is a shared channel. It means that it is a way to share resources (channelization codes) between different users. In systems such as in particular UMTS, using the technique of Orthogonal Variable Spreading Factor, i.e. where the channnelization codes are taken from a channelization code tree, a given part of the channelization code tree can be used for different terminals from one frame to the following frame, in order to enable different user bit rates. Compared to dedicated channels, one advantage of this channel is to avoid the signalling associated to the allocation and release of the dedicated channels between the activity and inactivity periods.

PDSCH carries only data. All layer 1 signalling is transmitted on an associated dedicated physical channel (DPCH). This Layer 1 signalling, such as channelization code to be used for the DSCH or data transport format description (number and size of the transport blocks), is carried on the downlink physical control channel (DPCCH) part of the associated DPCH.

When there are data to transmit on a PDSCH, the RNC sends to the Node B a DSCH data frame (as described in 3GPP TS 25.435). This DSCH data frame contains the data to be transmitted, and a header. This header, among other things, contains an offset that is used by the Node B to set PDSCH power. The offset indicates the PDSCH power relatively to the power of a given field of bits of the downlink DPCCH, i.e. the TFCI bits (where TFCI stands for Transport Format Combination Indicator).

A current solution with Release 99 of the 3GPP specifications is to have a constant offset between the PDSCH power and the TFCI power during the whole call duration.

However, a drawback of this solution is that it will lead to a large waste of power. Indeed, by keeping a constant power offset between PDSCH and the TFCI bits of the DPCCH, the PDSCH power will be much larger than necessary in many cases. For example, in non soft handover situation, the power offset will be as large as in soft handover situation, whereas it is not necessary, as will also be explained in the following.

Since the PDSCH is a channel shared by several users, it cannot be in soft-handover (i.e. a UE cannot recombine PDSCH information from several cells at the same time), contrary to the dedicated physical channels (DPCH).

One problem to solve is to configure the power offset in order to always reach the target quality of service on the PDSCH, while consuming as low transmit power as possible.

This is particularly difficult due to the soft-handover situation where the UE receives the DPCH from several cells, while the PDSCH is received from only one cell. Indeed, in this case, due to macro-diversity gain (thanks to soft-handover), the TFCI transmit power is reduced compared to non soft-handover situation, and therefore the PDSCH as well since it is linked to the TFCI power.

This is also difficult due to the fact that the PDSCH may not be transmitted from the best cell of the active set (e.g. could be transmitted by the cell of the UE active set, which is received with lowest quality by the UE).

Therefore, in the above recalled solution, to ensure that the PDSCH power is still sufficient to reach the target QoS (Quality of Service), even in soft-handover, the power offset has to be quite large, to compensate for the SHO (Soft HandOver) gain on the DPCH and the fact that the PDSCH may be transmitted by the worst cell of the active set. This is not satisfying from system performance point of view (it can cause a huge reduction of system capacity).

Some modifications were introduced in Release 4 of the 3GPP specifications. In this release, it is possible to configure the value of the power offset depending on whether the PDSCH is transmitted by the best received cell by the UE or another cell (this solution only applies in case of soft handover).

This solution is not good enough either, since there is also a waste of power in non-soft handover situation, as the same values of the power offsets are used in non-soft handover and soft-handover situations.

The present invention in particular enables to solve part or all of the above-mentioned problems, or to avoid part or all of the above-mentioned drawbacks. More generally the aim of the present invention is to improve the setting of power offset for downlink shared channels in such systems.

These and other objects are achieved, in one aspect of the present invention, by a method for setting a power offset for power control of a downlink shared channel in a mobile radiocommunication system, a method wherein said power offset is dynamically adapted, as a function of radio environment conditions, in a way as to minimise the transmit power of said downlink shared channel, while still achieving the quality of service.

The present invention also has for its object network elements such as base station and base station controller, for performing such a method, as well as a mobile radiocommunication system, comprising at least one such network element.

Other aspects and/or objects of the present invention will be defined in the appended claims.

These and other aspects and/or objects of the present invention will become more apparent from the following description taken in conjunction with the accompanying drawings, wherein:

- figure 1 is intended to recall the general architecture of a mobile communication system, such as in particular UMTS,
- figures 2 to 19 are different diagrams intended to illustrate the principles on which the present invention is based.

The present invention may also be explained in the following way.

The present invention proposes to adapt dynamically the power offset between the PDSCH and the field of bits of the associated DPCCH (i.e. the TFCI bits of the associated DPCCH) relatively to which this power offset is expressed, in order to keep approximately the same quality level on PDSCH under all circumstances, and to avoid waste of power. In particular, it is proposed to use different power offsets in soft-handover and non soft-handover situations.

First, a recall of the current 3GPP mechanisms to set up the power offset in Releases R99 and R4 (and also R5) of 3GPP specifications will be given, to enable a better understanding of the invention.

1) R99

The CRNC can signal the PDSCH power offset (expressed relatively to the TFCI bits of the DPCCH) to the Node B via the DSCH (Iub) Frame Protocol (see 3GPP TS 25.435), for each DSCH data frame.

This power offset is then used by the Node B to fix the PDSCH transmit power to transmit this data frame.

2) R4

In addition to the R99 mechanism, which is still present, the SRNC can signal to the Node B, via RNSAP/NBAP protocol (e.g. with the Radio Link Setup Request message), the additional power offset to apply in case the PDSCH is transmitted from the primary cell, i.e. the best received cell (this additional power offset being negative, so that its addition enables to reduce the overall power offset in case the PDSCH is transmitted from a primary cell). The primary cell is identified thanks to physical layer signaling between the UE and the Node B, i.e. every slot the UE sends the indication of the primary cell to all Node B belonging to its active set.

This scheme enables to have a different power offset for primary and non-primary cells. Indeed, since a primary cell is better received by the UE, the PDSCH transmit power can be lower, than when transmitted by a non-primary cell.

As recalled above, with R99 and R4 implementations of PDSCH power control, a current solution is to always have a fixed value for the power offset(s) signaled by the RNC(s) to the Node B via the Frame Protocol. In this case, the (overall) power offset has only one value in R99 and two values in R4 (one for the primary cell and one for the non-primary cells). However, this is not sufficient to ensure good performance of PDSCH power control as explained previously.

To simplify the description, in the following, the term "power offset" will be used to designate the overall power offset applied to find the PDSCH transmit power relatively to the TFCI power. Therefore, it is equal to the power offset signaled by the CRNC to the Node B, or the sum of the power offset signaled by CRNC to the Node B and the additional power offset signaled by the SRNC to the Node B (R4 only, if the PDSCH is transmitted by the primary cell). However, other conventions could be chosen.

The present invention proposes to adapt dynamically the power offset between PDSCH and the TFCI bits of the DL DPCCH (DownLink DPCCH) in order to minimize the PDSCH power, while still achieving the target quality of service. Some criteria and methods to adapt this power offset are proposed.

As will also be explained in a second part of the description, simulations carried out within the frame of the invention showed that there is a large dependency of the requested PDSCH power offset on radio environment conditions.

The expression radio environment conditions will be used to cover all aspects that may affect reception quality, including radio channel conditions, soft handover configuration, user mobility, system design, ... etc. The radio channel conditions include parameters such as in particular path loss, multi-path propagation conditions, ...etc.The soft handover configuration includes parameters such as in particular the number of cells in the active set, the path loss differences between the active cells, ...etc. User mobility includes parameters such as in particular the speed. System design includes parameters such as in particular the type of cells, i.e. macrocells, microcells, ...etc.

Some radio environment models have been proposed, such as in particular the vehicular radio environment model (characterized by large macrocells and high mobile speed) and the pedestrian radio environment model (characterized by small microcells and low mobile speed). Such models may be used in the present invention to express the dependency of the requested PDSCH power offset on the radio environment; however, as will also be explained in more detail , it has been found within the frame of the invention that the PDSCH power offset may advantageously depend on certains parameters, including, individually or in combination, mobile speed, radio channel conditions, soft handover configuration.

As an example, the present invention proposes to adapt dynamically the power offset(s) in function of UE speed and radio channel estimations performed for example by the Node B (and signaled to the RNC) or by the RNC itself. For such estimations, usual methods can be used. Some examples are briefly given here:

- The UE speed: it can be estimated by the RNC based on the number of handovers in a given time period. It can be also estimated by Node B, based on the output of the uplink channel estimation (that gives an indication of the channel and therefore of the channel variations).

- The radio channel: it can be estimated for example by the Node B, based on the output of the uplink channel estimation (usually based on UL DPCCH (UpLink DPCCH) pilot bits). For example, it could be characterized by the number of paths, or the average relative powers between some of the paths (the two main ones...).

There is also a large dependency of the PDSCH power offset on soft handover configuration parameters such as the number of cells in the active set and/or the path loss differences between the active cells (if several). As another example, the present invention proposes to dynamically adapt the power offset in function of such criteria. Several more or less complex proposals are presented below.

## 1) Solution 1 (R99/R4)

The SRNC is aware of the number of cells in the UE active set.

In addition, the 3GPP standard makes it possible for the SRNC to request the UEs to report periodically some path loss measurements to the SRNC, when they are in SHO (or all the time, knowing that for the present method, they will be only used in SHO). Other measurements from the UE, enabling the SRNC to estimate the path loss, may also be used, e.g. CPICH RSCP (CPICH received code power, where CPICH stands for Common Pilot CHannel). In this example, the SRNC may estimate the path loss as CPICH Tx power - CPICH RSCP. CPICH Ec/No measurements may also be used.

Therefore the power offset(s) can be fixed in function of the number of cells in the active set and/or some path-loss differences as estimated from UE measurement reports. In order to simplify this method, only a few possible power offset values may be selected.

The drawback of this solution is the complexity and the amount of signaling required on the radio interface.

## 2) Solution 2 (R99/R4)

One simpler solution consists in setting the power offset only based on the number of cells in the UE active set.

A particular case is to have different power offsets when the UE is in soft-handover and when the UE is not in soft-handover, knowing that the SRNC is aware of the cells in the UE active set (and therefore of their number).

Two offset values are required for R99, and three for R4 (one for non-SHO, one for the primary cell when the UE is in SHO, one for the non-primary cells when the UE is in SHO).

## 3) Solution 3 (R99 only)

In case the UE is in soft-handover, one possibility is to have different power offsets for primary and non-primary cells, as it is done with 3GPP R4 Release.

However, in case of R99, there is no fast L1 signaling for the signaling of primary or non primary cells. Therefore, a different method has to be used to detect primary and non-primary cells. The present invention proposes to perform this detection based on RRC measurement reports from the UE to the SRNC. For example, event-triggered measurement reports could be used with "event 1 d" (change of best cells), see 3GPP TS 25.331 for the definition of this event.

Note that some of these solutions may be combined, e.g. solution 2 + 3 with 3GPP R99 Release.

In addition, one important issue is that only the SRNC may have the whole knowledge of the number of cells in the active set and the path-loss difference between the active cells. However, in the current 3GPP standard, the normal PDSCH power offset is signaled by the CRNC to the Node B, i.e. this power offset is not set up by the SRNC and therefore cannot be set easily up in function of the number of cells in the active set and/or the path-loss difference between the active cells. Two proposals are made to solve this problem:

1) Add in the 3GPP standard the possibility for the SRNC to signal a value of the PDSCH power offset to the DRNC via Iur DSCH Frame Protocol (or via RNSAP).

To be backward compatible, it could be defined that the power offset is optionally sent by the SRNC to the DRNC. In case it is sent, the DRNC has to send the same value to its Node B. Otherwise, the power offset is set up by the DRNC.

Another possibility would be that the SRNC signals to the DRNC that the UE is in soft handover or any other information of this type (such as the number of links that the UE has with RNC(s) other than this DRNC, ...etc.) enabling to set the PDSCH power offset. Such information could also be signaled via Iur DSCH Frame Protocol or via RNSAP protocol.

In the following, all such possibilities for such information will also be grouped under the expression "information indicative of the PDSCH power offset".

2) Without change of the 3GPP standard, such proposals can still be implemented at least in case the SRNC and CRNC are the same RNC. In addition, when the SRNC and CRNC are separate RNC, the CRNC may have still sufficient knowledge:

- The CRNC can approximate the number of cells in the UE active set by the number of cells of the CRNC present in the UE active set.
- The CRNC can choose the largest value when it is not able to take the most appropriate choice. By example, since a CRNC different from the SRNC is not aware of the path-loss measurements reported by the UE, it can choose the largest power offset for any path loss difference (if path-loss differences are used).

The present invention may also be explained in the following way, which will be presented together with simulations results, which, as indicated above, were obtained within the frame of the invention and showed that there is a large dependency of the requested PDSCH power offset on radio environment conditions.

## 1. Introduction

As recalled above, when there are data to transmit on a PDSCH, the RNC sends to the Node B a DSCH data frame (as described in 3GPP TS 35.435 "UTRAN I$_{ub}$ Interface User Plane Protocols for Common transport Channel data Streams"). This DSCH data frame contains the data to be transmitted, and a header. This header, among other things, allows the Node B to compute TFCI field for the DSCH. It also contains an offset that is used by the Node B to set PDSCH power.

PDSCH power is set in comparison with the power of the TFCI bits of the DPCCH.

To simplify, in the following, the term "DPCCH power" will also be used to designate the power of the TFCI field of the DPCCH.

According to the usual solution, the PDSCH power offset generally depends on the services on the PDSCH and on the DPCH. As an example, DPCH may carry a voice service (for example AMR 12.2 service) and PDSCH may carry a PS (Packet Switched) service, with different rates (32, 64, 128, 144, 384 kbps), knowing that the offsets can be determined for each situation.

The PDSCH power offset thus required to reach a given quality of service may be determined by any known method.

## 2. PDSCH/DPCCH power offset in non soft handover situation

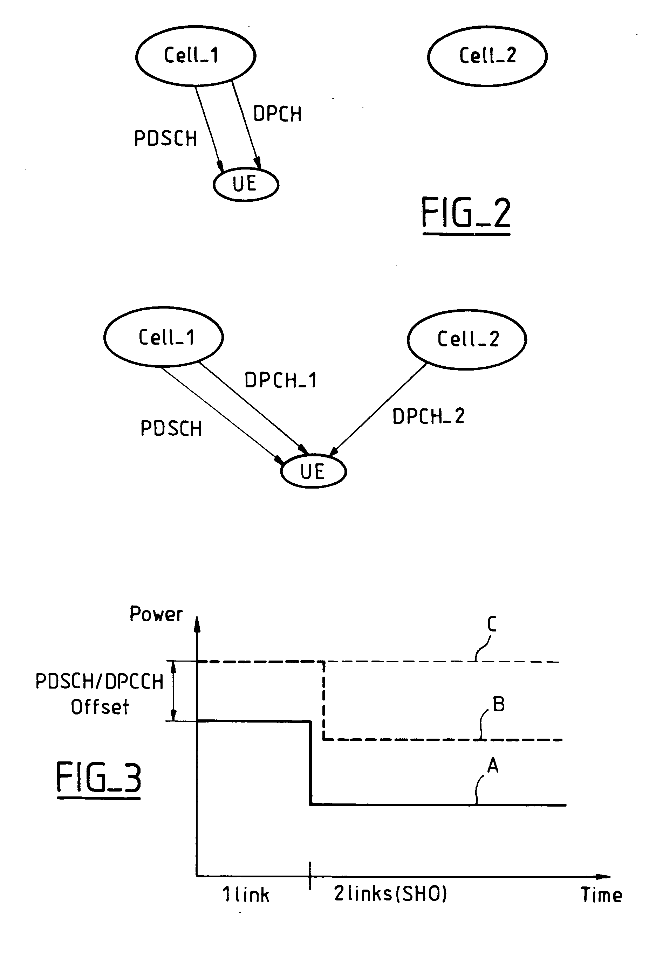

Let's consider a UE receiving a PDSCH and a DPDCH. We assume that this UE is receiving only from one cell of a Node B, as shown in figure 2.

In such a situation, the offset between PDSCH and DPCH, which is required to reach a target quality of service (noted $P_{TARGET\_PDSCH}$) can be chosen as recalled above, as a function of the services on the PDSCH and on the DPCH. The PDSCH and the DPDCH are then expected to be received with their respective required quality, which can be written:

$$P_{PDSCH} = P_{DPCCH} + \text{Offset} = P_{TARGET\_PDSCH}.$$

## 3. PDSCH in soft handover

### 3.1. Problem in soft handover

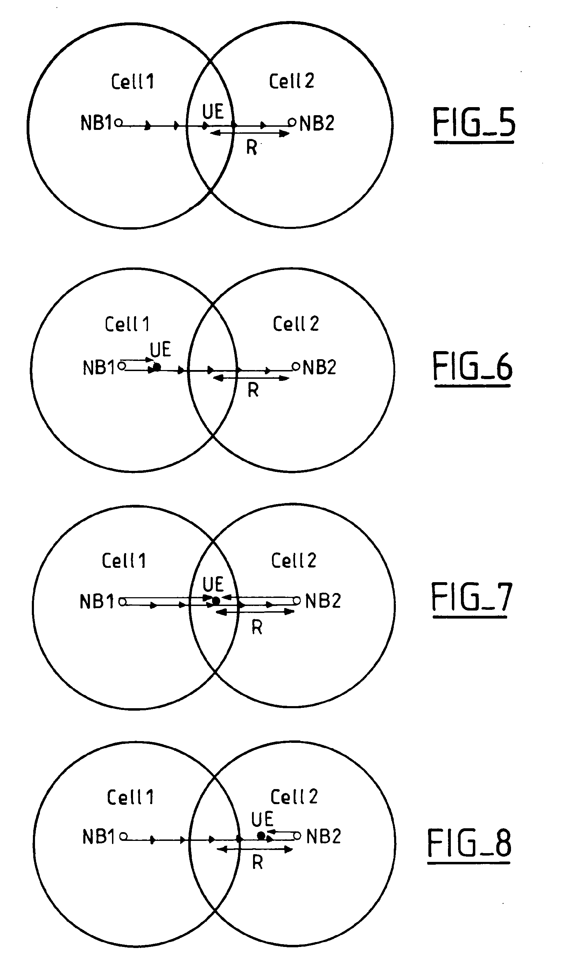

Figure 3 illustrates the case where a link is added in the active set of the UE. As illustrated by figure 4, DPCCH power (as illustrated by curve A) decreases, since the new link provides a soft handover gain. PDSCH power (as illustrated by curve B) is also decreased by the same amount.

The decreasing in the DPCCH power does not involve any quality loss, since the new link allows to reach the same quality of service. But the PDSCH is transmitted only by one cell. The quality of service on PDSCH will then decrease, since the power of this channel will decrease, which can be written:

$$P_{PDSCH} = P_{DPCCH\,1} + \text{Offset} < P_{TARGET\,PDSCH}$$

where $P_{TARGET\,PDSCH}$ is illustrated in C.

The usual solution to guarantee the target quality of service for the PDSCH under all circumstancesis to find the worst case and increase the PDSCH offset determined as recalled above, so that even in this case, the power of the PDSCH is large enough to reach the target quality of service. As already mentioned, this is an important drawback of the PDSCH.

## 3.2. Required power offset between PDSCH and DPCCH

The aim of this section is to determine the optimal power offset between PDSCH and DPCCH. "Optimal" means that it is the power offset required to keep exactly the same quality of service under all circumstances (1 or 2 cells in the active set, different path losses of both cells...).

We will first introduce the context we choose to plot the different curves that are shown in the following sections. Then, the required PDSCH Tx power will be determined and plotted.

We will compare this required PDSCH Tx power to the Tx power that is really used when SHO occurs.

The difference between these two Tx powers is the supplementary offset that we should add to the offset as indicated in section 1 to keep the target quality of service.

### 3.2.1. Context

Let's consider a UE moving from one cell (Cell 1) to another (Cell 2). For example, we will consider that the two cells have the same size (radius equal to R), as illustrated in figure 5.

The UE first communicates with the Cell 1, as illustrated in figure 6. Then, when the Cell 2 is at 3 dB path loss above the Cell 1, the UE will communicate with both cells (soft handover), as illustrated in figure 7 (it being noted that the value of 3 dB is only a typical value to enter in the active set of the UE, but other values could be used instead).

When the path loss of the Cell 1 will be 4 dB above the Cell 2, the Cell 1 will no longer be in the active set (it being noted that the value of 4 dB is only a typical example and other values could also be used for the threshold to leave the UE active set). The UE will then only communicate with the Cell 2, as illustrated in figure 8.

### 3.2.2. PDSCH required Tx power

Keeping in mind this situation (the UE moving from the Cell 1 to the Cell 2), we will plot several graphs showing Tx powers (for DPCCH and PDSCH) in function of the location of the UE. We choose, in order to simplify the graphs, to plot Tx powers in function of x = "Path_loss_cell_1 - Path_loss_center". Path_loss_center is the path loss of each cell when the UE is at halfway between the two cells. In this way, at x = 0, the Tx powers that would be needed to transmit DPCCH are equal for both cells.

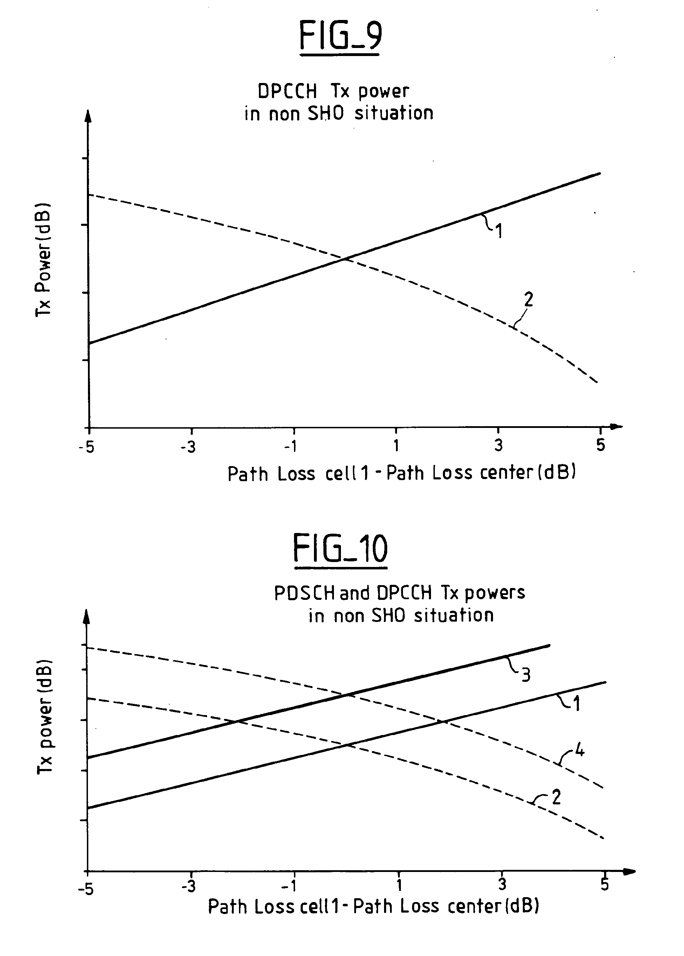

Figure 9 shows the Tx powers that would be needed to transmit a DPCCH from Cell 1 (curve noted 1) or from Cell 2 (curve noted 2) if only one link was allowed (non-soft handover case).

Figure 10 shows the Tx powers that would be needed in non soft handover situation to transmit a DPCH (curve 1) and a PDSCH (curve 3) from the Cell 1 or a DPCH (curve 2) and a PDSCH (curve 4) from the Cell 2.

PDSCH powers are just offset in comparison with DPCCH powers as recalled above. The value of the offset depends on the services on DSCH and on DCH.

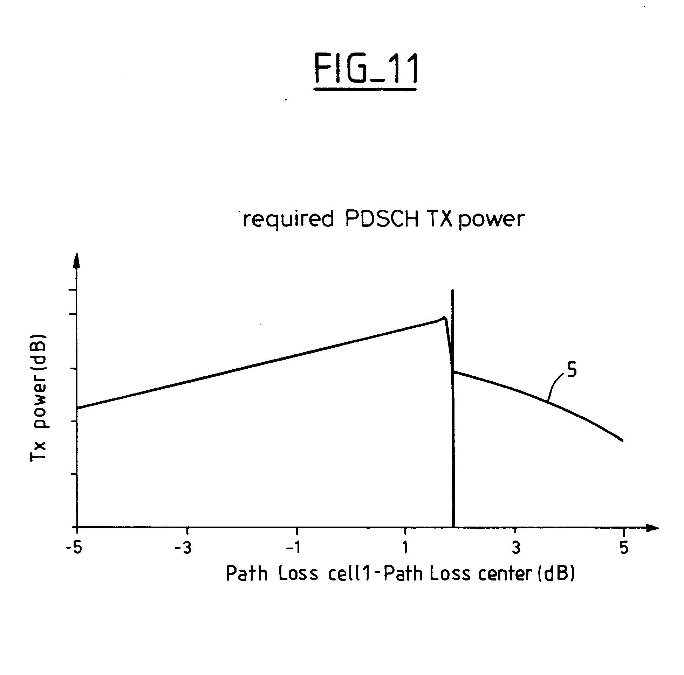

The required PDSCH TX power is as represented with curve 5 in figure 11. As illustrated in figure 11, the Cell 1 will transmit PDSCH, unless it gets out of the active set, that is to say unless Path_loss_cell_1 - Path_loss_cell_2 > 4 dB. This limit is presented with a vertical line in figure 11. Beyond this limit, the Cell 2 will transmit the PDSCH.

### 3.2.3. Real PDSCH Tx power in SHO

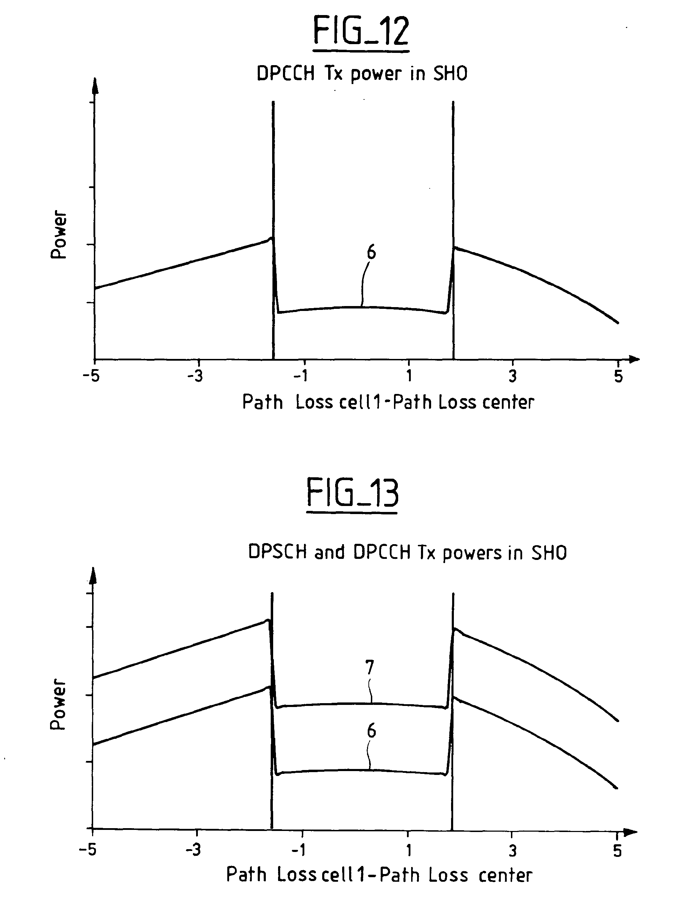

Let's see now what really happens in soft handover (figure 12) if we always keep the same offset between the PDSCH power and the DPCCH power. Figure 12 represents the DPCCH Tx power with SHO algorithm (curve 6). When the Cell 2 is 3 dB path loss above the Cell 1 path loss, the Cell 2 enters the active set, and when the Cell 1 is 4 dB path loss above the Cell 2, the Cell 1 gets out of the active set.

The limits (3 dB and 4 dB) describing the admission and rejection of cells from the active set have been represented by two vertical lines.

Figure 13 shows what happens to PDSCH Tx power with SHO algorithm , if PDSCH/DPCCH power offset is constant. PDSCH Tx power is illustrated with curve 7 and DPCCH power with curve 6.

### 3.2.4. Optimal offset between PDSCH and DPCCH Tx powers

The required power offset between the PDSCH and the DPCCH is the difference between the required Tx power for PDSCH (section 3.2.2) and the DPCCH Tx power (section 3.2.3).

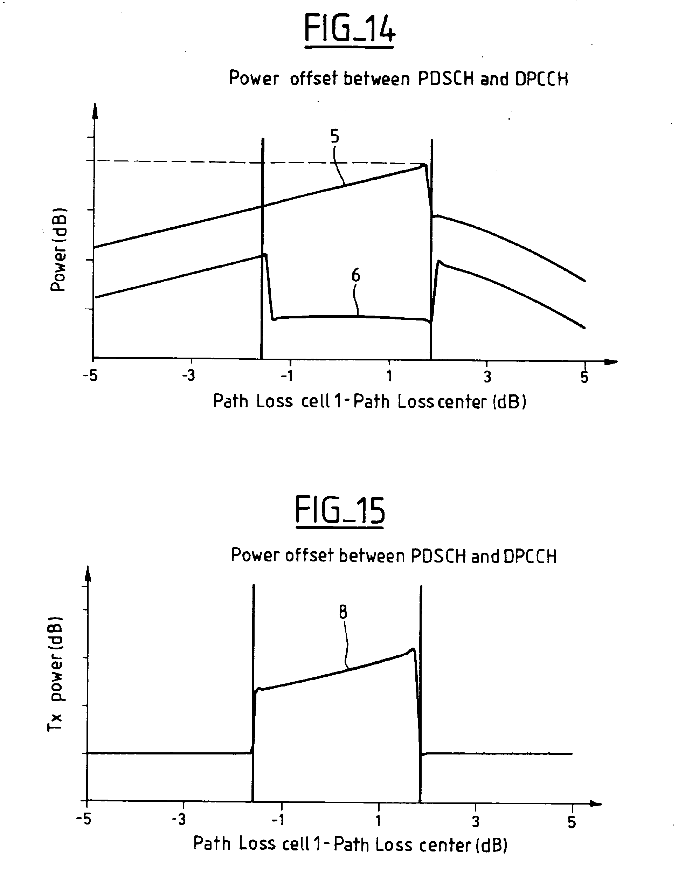

These two powers are shown in figure 14, respectively with curves 5 and 6.

Figure 15 shows, with curve 8, the offset that is needed between PDSCH and DPCCH Tx powers.

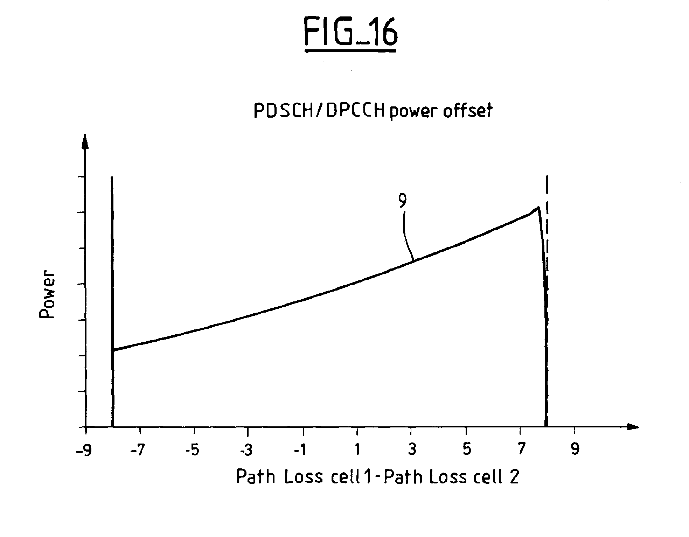

Curve 9 (figure 16) illustrates the same type of curve as curve 8, but plotted in function of Path_loss_cell_1 - Path_loss_cell_2.

We could then, as proposed at the end of the section 3.1, set an offset so that in all cases, the PDSCH Tx power is high enough to provide the required quality of service. But this solution means that, in non soft handover situation (70 to 75 % of the time), the PDSCH power will be above the required level, and that in soft-handover, the PDSCH power may be above the required level.

## 4. Proposed solutions to set PDSCH/DPCCH Tx power offset

### 4.1. Optimal solution

As the UE periodically reports to the RNC the path loss of each cell, the RNC could send in the "DSCH data frame" an offset depending on the difference "Path_loss_cell_1 - Path_loss_cell_2".

This path-loss difference may be estimated by UE measurement reports or by Node B common measurement reports (in the second case, by assuming that the path loss is about the same in UL and DL). However, due to the measurement periods of a few seconds, the path loss difference will not be instantaneously known by the RNC and for some UE speeds, the estimation error on the path loss difference may be significant. Of course, the measurement period could be reduced but in this case, the signalling amount would be too large.

Therefore, some other sub-optimal solutions are proposed in the following to set the PDSCH/DPCCH Tx power offset. Each solution has its own drawbacks and advantages.

The PDSCH/DPCCH power offset should depend too on other environment conditions such as in particular the UE speed and the radio environment model (such as for example vehicular or pedestrian radio environment model). In order to simplify the choice of the power offset, different values could be set for example in urban or rural places. A more satisfactory (but more complicate) method would be to estimate such environment conditions in the Node B thanks to the uplink transmission.

Speed should be taken into account too. Indeed, the power offset may be different for different mobile speeds for a given radio environment model for example.

### 4.2. Solution with one offset

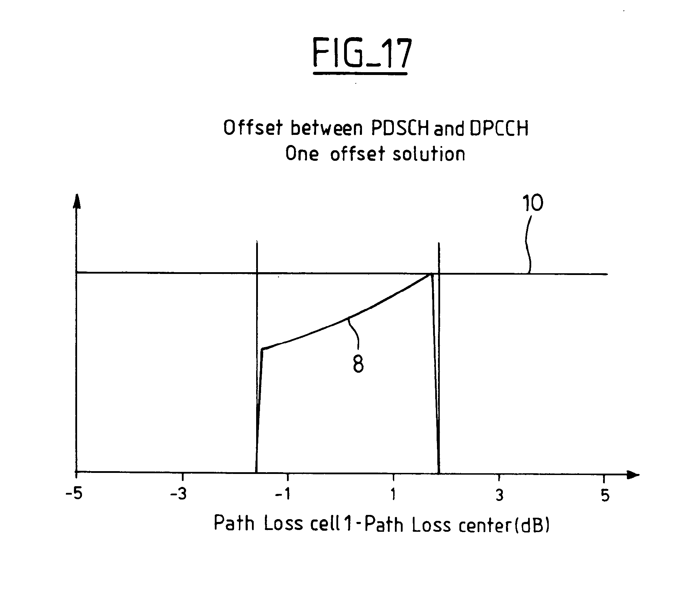

The first and simplest solution is to set a sufficient offset between PDSCH and DPDCH, so that the quality of service is reached under all circumstances, as illustrated by curve 10 in figure 17.

However, as pointed it out before, it implies a waste of power, since the Tx power of PDSCH will be unnecessarily large all the time, decreasing considerably the capacity of the involved cells.

### 4.3. Solution with two offsets

A better solution would be to change the value of the offset, depending on the number of cells in the active set.

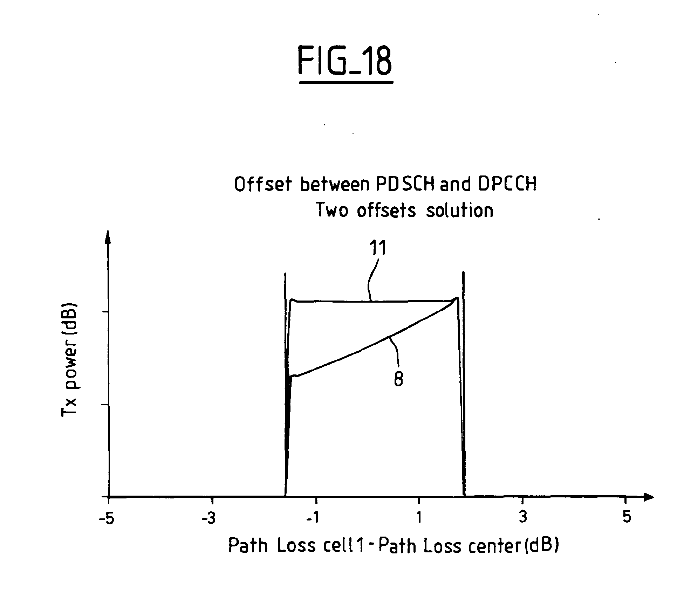

For example, in the example considered above of SHO with two cells, the proposed offset is as illustrated by curve 11 in figure 18, i.e. there are two power offsets, one in non SHO situation (i.e. for 1 radio link), and another one in SHO situation (i.e. for 2 radio links).

It can be noted that SHO with more than 2 cells occurs seldom. We can then consider without deteriorating too much the performances that SHO means an active set of 2 cells. For the case of an active set of for example 3 cells, if the power offset with 3 cells is significantly different than with 2 cells, a solution with 3 power offsets (for 1, 2 and 3 radio links) could be also implemented.

The RNC is the equipment that decides to perform SHO, and is also the equipment that computes the Tx power offset between PDSCH and DPCCH. Thus, it is quite simple for the RNC to send a different offset in the "DSCH data frame", depending on the number of cells in the active set.

The RNC should change the value of the offset each time a cell is added or removed from the active set.

During soft handover, the power offset guaranty the quality of service whatever is the difference of path loss between the two cells. When Path_loss_cell1 - Path_loss_cell2 < 4dB the offset is larger than the optimal required offset, i.e. there is a loss in comparison with the optimal solution. This loss may be different for different radio environment conditions such as for example for different speeds and radio environment models.

In SHO situation, the offset will be too high in average. But the waste of power will be much lower than the previous solution, since in non-SHO situation, that is to say 70 or 75 % of the time, the offset will be equal to the optimal offset. In addition, this solution is also quite simple. Therefore, it is preferred to the one-offset solution.

### 4.4. Solution with three offsets

In order to reduce the waste of power in SHO situation, the RNC could change the value of the PDSCH/DPCCH Tx power offset, depending on which cell is the best-received one (in addition to have a different offset in SHO and non SHO). Cell 2 becomes the best received cell when Path_loss_cell_1 - Path_loss_cell_2 < 1 dB. (This trigger of 1 dB is taken as an example since it is a typical value, but other values could be used).

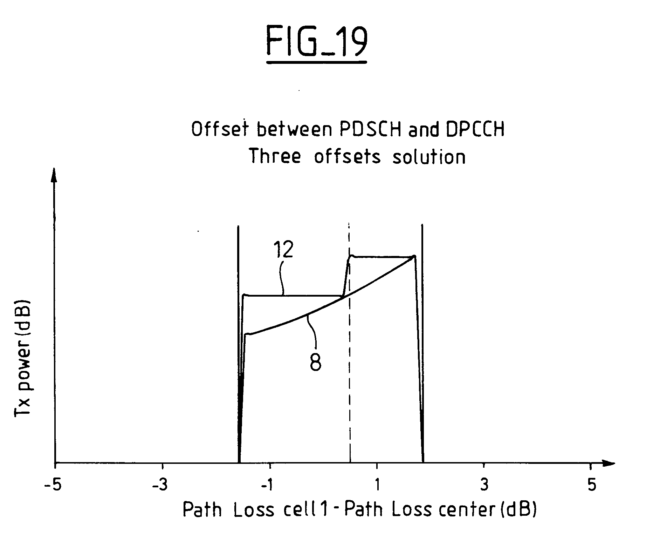

The offset would be as illustrated with curve 12 in figure 19 where the change of best cell is illustrated by a vertical dotted line.

As in the previous proposed solution (with two offsets), there is a loss due to the fact that the power offset is larger than the optimal required power offset. However, when the cell 1 is the best received one, the offset is closer to the optimal required offset than with the previous method. The remaining loss in soft handover situation may also be different for different radio environment conditions such as for example for different speeds and radio environment models.

In the proposed method, the RNC would change the offset each time a cell is added or removed from the active set and each time the best cell is changed. For this last trigger, this could be done by configuring the measurement reporting from the UE such that the UE also reports events 1 d (change of best cell) as defined in 3GPP TS 25.331. This would enable to know the change of best cell with reduced signalling (compared to the solution where the UE would periodically report path loss information so that the RNC be able to detect what is the best received cell). To even further reduce the signalling, a hysteresis of around 1 dB could be used to detect the change of best cell.

4.5. Release 4 improvement

In the 3GPP release 4 specifications of UMTS, the UE regularly sends SSDT signalling (where SSDT stands for Site Selection Diversity Transmission) directly to the cells. This SSDT signalling allows each cell to know if it is the best received one by the UE. The cell transmitting PDSCH could then know if it is primary or secondary cell (that is to say the best received cell or not) and could set directly the PDSCH/DPCCH Tx power, as proposed in the previous section, without any command from the RNC.

In addition, it is proposed to have two sets of offsets: one when the UE is not in soft-handover and one when the UE is in soft-handover to have a similar solution to the one proposed in the previous section.

The present invention also has for its object a network element (such as in particular base station (or Node B) and base station controller (or RNC) comprising means for carrying out a method according to the invention.

For example:

-    in a base station or Node B, said means may comprise means for receiving, from a base station controller or RNC controlling said base station or Node B, at least one information indicative of a power offset for transmission of said downlink shared channel to said mobile terminal, said information being intended to dynamically adapt said power offset, as a function of radio environment conditions, in a way as to minimise the transmit power of said downlink shared channel, while still achieving the quality of service,
-    in a base station controller or RNC, said means may comprise means for transmitting such information to a base station or Node B controlled by said base station controller or RNC,
-    in a base station controller or RNC, said RNC having a role of DRNC, said means may further comprise means for receiving such information from a base station controller or RNC having a role of SRNC,
-    in a base station controller or RNC, said RNC having a role of SRNC, said means may comprise means for transmitting such information to a base station controller or RNC having a role of DRNC,

Because the specific implementation of the above means will represent no particular difficulty for the person skilled in the art, they do not need to be described in more detail here than as above, by stating their function.

The present invention also has for its object a mobile radiocommunication system, comprising at least one such network element according to the present invention.

**Claims**

1.    A method for setting a power offset for power control of a downlink shared channel in a mobile radiocommunication system, a method wherein said power offset is dynamically adapted, as a function of radio environment conditions, in a way as to minimise the transmit power of said downlink shared channel, while still achieving the quality of service.

2.    A method according to claim 1, wherein at least one network element called first network element transmitting a downlink shared channel to a mobile terminal receives from at least another network element, called second network element, at least one information indicative of a power offset for transmission of said downlink shared channel to said mobile terminal, said information being intended to dynamically adapt said power offset, as a function of radio environment conditions, in a way as to minimise the transmit power of said downlink shared channel, while still achieving the quality of service.

3.    A method according to any of claims 1 or 2, wherein said radio environment conditions include at least one of the following parameters: mobile speed, radio channel characteristics, soft handover configuration parameters.

4.    A method according to claim 3, wherein said soft handover configuration parameters include at least one of the following parameters : number of cells in the Active Set, path-loss differences between active cells.

5.    A method according to claim 3, wherein said soft handover configuration parameters includes an indication as to whether the mobile terminal is in soft handover or not.

6.    A method according to any of claims 3 to 5, wherein said soft handover configuration parameters includes an indication as to whether the cell of the Active set which transmits said downlink shared channel is a primary or non-primary cell.

7. A method according to any of claims 2 to 6, wherein said first network element corresponds to a base station, or Node B in a system of UMTS type.

8. A method according to any of claims 2 to 7, wherein said second network element corresponds to a base station controller, or radio network controller or RNC in a system of UMTS type.

9. A method according to any of claims 2 to 8, wherein said second network element corresponds to a network element having a function of control of communication with said mobile terminal, including a function of control of establishment and release of radio links, in particular, in a system of UMTS type, a radio network controller or RNC having a role of SRNC (« Serving Radio Network Controller »).

10. A method according to any of claims 2 to 9, wherein said second network element corresponds to a network element controlling said first network element, in particular, in a system of UMTS type, a radio network controller or RNC controlling a Node B or having a role of CRNC (« Controlling Radio Network Controller ») for this Node B.

11. A method according to any of claims 2 to 10, wherein, in particular in a system of UMTS type, said information is transmitted from a RNC having a role of SRNC and a role of CRNC for a Node B, to this Node B, according to NBAP (« Node B Application Part ») protocol.

12. A method according to any of claims 2 to 9, wherein said second network element corresponds to a network element not controling said first network element, and said first network element receives said information, from said second network element, via a third network element controlling said first network element, in particular, in a system of UMTS type, via a radio network controller or RNC having a role of DRNC (« Drift Radio Network Controller »).

13. A method according to any of claims 2 to 10, wherein, in particular in a system of UMTS type, said information is transmitted from a RNC having a role of SRNC, to a RNC having a role of DRNC and a role of CRNC for a Node B, according to RNSAP (« Radio Network Subsystem Application Part ») protocol, then re-transmitted from this latter RNC to the Node B, according to NBAP (« Node B Application Part ») protocol.

14. A method according to any of claims 2 to 10, wherein, in particular in a system of UMTS type, said information is transmitted from a RNC having a role of SRNC, to a RNC having a role of DRNC and a role of CRNC for a Node B, according to Iur Frame Protocol, then re-transmitted from this latter RNC to the Node B, according to Iub Frame Protocol.

15. A network element, comprising means for performing a method according to any of claims 1 to 14.

16. A base station, or Node B, comprising means for performing a method according to any of claims 1 to 14.

17. A base station or Node B according to claim 16, wherein said means include means for receiving said information from a base station controller or RNC controlling said base station or Node B.

18. A base station controller or RNC, comprising means for performing a method according to any of claims 1 to 14.

19. A base station controller or RNC according to claim 18, wherein said means include means for transmitting said information to a base station or Node B controlled by said base station controller or RNC.

20. A base station controller or RNC according to claim 19, wherein said RNC has a role of DRNC and said means further include means for receiving said information from a base station controller or RNC having a role of SRNC.

21. A base station controller or RNC according to claim 18, wherein said RNC has a role of SRNC and said means include means for transmitting said information to a base station controller or RNC having a role of DRNC.

22. A mobile radiocommunication system, comprising at least one network element according to any of claims 15 to 21.

# FIG_1

Uu        Iub    UTRAN        Iu

CN

Node B        RNC

UE

Iur

FIG_2

FIG_3

FIG_5

FIG_6

FIG_7

FIG_8

# FIG_9

DPCCH Tx power
in non SHO situation

# FIG_10

PDSCH and DPCCH Tx powers
in non SHO situation

# FIG_11

required PDSCH TX power

Tx power(dB)

Path Loss cell1-Path Loss center (dB)

-5   -3   -1   1   3   5

5

## FIG_12

### DPCCH Tx power in SHO

Power

6

Path Loss cell1-Path Loss center

-5  -3  -1  1  3  5

## FIG_13

### DPSCH and DPCCH Tx powers in SHO

Power

7

6

Path Loss cell1-Path Loss center

-5  -3  -1  1  3  5

## FIG_14

Power offset between PDSCH and DPCCH

## FIG_15

Power offset between PDSCH and DPCCH

# FIG_16

PDSCH/DPCCH power offset

# FIG_17

Offset between PDSCH and DPCCH
One offset solution

Path Loss cell 1 - Path Loss center (dB)

# FIG_18

Offset between PDSCH and DPCCH
Two offsets solution

# FIG_19

.

Offset between PDSCH and DPCCH
Three offsets solution

## EUROPEAN SEARCH REPORT

**European Patent Office**

Application Number

EP 03 29 2674

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 313 334 A (LG ELECTRONICS INC) 21 May 2003 (2003-05-21) * abstract * * column 3, line 1 - line 18 * * column 4, line 5 - column 5, line 37 * * column 8, line 56 - column 9, line 30 * * column 12, line 38 - line 55 * * figures 6,8,9 * --- | 1-9, 11-22 | H04B7/005 H04Q7/38 |
| X Y | EP 1 313 231 A (LG ELECTRONICS INC) 21 May 2003 (2003-05-21) * abstract * * column 2, line 40 - column 3, line 25 * * column 3, line 46 - column 4, line 11 * * column 6, line 19 - line 28 * * column 6, line 56 - column 7, line 5 * --- | 1-3,5-8 9-11, 15-22 | |
| X | EP 1 326 350 A (LG ELECTRONICS INC) 9 July 2003 (2003-07-09) * abstract * * column 2, line 21 - line 42 * * column 2, line 58 - column 3, line 37 * * column 6, line 10 - line 21 * * column 6, line 41 - line 58 * * figures 3,4,6 * --- | 1-3,5-8 | TECHNICAL FIELDS SEARCHED (Int.Cl.7) H04B H04Q |
| Y | EP 1 341 318 A (SAMSUNG ELECTRONICS CO LTD) 3 September 2003 (2003-09-03) * abstract * * page 3, line 2 - line 5 * * page 4, line 21 - line 29 * * page 5, line 35 - page 6, line 10 * * page 7, line 22 - line 29 * * page 7, line 46 - line 56 * * page 8, line 28 - line 32 * * page 9, line 28 - line 41 * * page 10, line 32 - line 50 * * figures 1,4,5,7,9 * ----- | 9-11, 15-22 | |

The present search report has been drawn up for all claims

| Place of search | Date of completion of the search | Examiner |
|---|---|---|
| THE HAGUE | 15 April 2004 | Lopez Márquez, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 526 652 A1**

## ANNEX TO THE EUROPEAN SEARCH REPORT
## ON EUROPEAN PATENT APPLICATION NO.

EP 03 29 2674

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2004

| Patent document cited in search report | | | Publication date | Patent family member(s) | | | Publication date |
|---|---|---|---|---|---|---|---|
| EP 1313334 | A | | 21-05-2003 | KR | 2003039850 | A | 22-05-2003 |
| | | | | KR | 2003041056 | A | 23-05-2003 |
| | | | | CN | 1420696 | A | 28-05-2003 |
| | | | | CN | 1420704 | A | 28-05-2003 |
| | | | | EP | 1313231 | A1 | 21-05-2003 |
| | | | | EP | 1313334 | A2 | 21-05-2003 |
| | | | | JP | 2003283424 | A | 03-10-2003 |
| | | | | JP | 2003298508 | A | 17-10-2003 |
| | | | | WO | 03043228 | A1 | 22-05-2003 |
| | | | | US | 2003114181 | A1 | 19-06-2003 |
| | | | | US | 2003112773 | A1 | 19-06-2003 |
| EP 1313231 | A | | 21-05-2003 | KR | 2003039850 | A | 22-05-2003 |
| | | | | CN | 1420696 | A | 28-05-2003 |
| | | | | CN | 1420704 | A | 28-05-2003 |
| | | | | EP | 1313231 | A1 | 21-05-2003 |
| | | | | EP | 1313334 | A2 | 21-05-2003 |
| | | | | JP | 2003283424 | A | 03-10-2003 |
| | | | | JP | 2003298508 | A | 17-10-2003 |
| | | | | WO | 03043228 | A1 | 22-05-2003 |
| | | | | US | 2003114181 | A1 | 19-06-2003 |
| | | | | US | 2003112773 | A1 | 19-06-2003 |
| EP 1326350 | A | | 09-07-2003 | CN | 1431838 | A | 23-07-2003 |
| | | | | EP | 1326350 | A1 | 09-07-2003 |
| | | | | JP | 2003283425 | A | 03-10-2003 |
| | | | | US | 2003128673 | A1 | 10-07-2003 |
| EP 1341318 | A | | 03-09-2003 | CA | 2419005 | A1 | 17-08-2003 |
| | | | | CN | 1455607 | A | 12-11-2003 |
| | | | | EP | 1341318 | A2 | 03-09-2003 |
| | | | | JP | 2003298509 | A | 17-10-2003 |
| | | | | US | 2003232622 | A1 | 18-12-2003 |

EPO FORM P0459

For more details about this annex : see Official Journal of the European Patent Office, No. 12/82